# EUROPEAN PATENT SPECIFICATION

(11) **EP 0 791 147 B1**
(45) Date of publication and mention of the grant of the patent: **23.02.2000**
(21) Application number: 95939441.2
(22) Date of filing: 07.11.1995
(51) Int. Cl.: F16H 1/32, F16H 13/06

(54) **ECCENTRIC GEAR**
EXZENTERGETRIEBE
DISTRIBUTION EXCENTRIQUE

(30) Priority: 29.11.1994 SE 9404154
(43) Date of publication of application: 27.08.1997
(73) Proprietor: Scandrive Control AB, 730 40 Kolbäck (SE)
(72) Inventor: RENNERFELT, Gustav, S-181 47 Lidingö (SE)
(74) Representative: Johansson, Lars E.
(86) International application number: SE9501317
(87) International publication number: WO9617187

(56) References cited:
- EP-A- 0 004 703
- EP-A- 0 196 403
- SE-C- 500 254
- SE-C- 501 463

## Description

### Technical Field of the Invention

The present invention relates to an eccentric gear unit as defined in the preamble of claim 1 and known from EP-A-5 945 49.

Most commonly, the rims mentioned in the preamble consist of gear rings which guarantee that the rotation speed reducing element rolls off planetarily upon the inside of the gear housing in a reliable way also at large torques.

### Prior Art

Eccentric gears are generally produced and offered for sale as independent product units which may be inserted between arbitrary driving sources and driven objects, the driving source being directly or indirectly connected to the input shaft of the gear, while the driven object is connected to the output shaft. An advantage of eccentric gears is that they in one sole step make possible large gear change relations, for instance within the range of 40:1 to 200:1 for those gears which work with gear rings. Due to this reason, the gears are often used in industrial process controllers and other controllers, in particular in the movable arms thereof. Specifically in controller arms, the eccentric gear may have double purposes, namely on one hand to execute the turning of an outer arm part between precise adjustment positions, and on the other hand to make possible the leading of other details to the free end of the arm, or "hand". This may relate to shafts to more distal gears and/or tools, such as dynamometric drivers, milling tools, turning tools, riveting tools and similar. It may also be about electrical, pneumatic and/or hydraulic conduits which shall be possible to lead out to the free end of the arm. For the latter purpose, it is required that the eccentric gear has a through opening or passage through which such details may be drawn. On such eccentric gears that are used specifically in industrial process controllers, high demands are also set for freedom from play and motion accuracy.

One thing that eccentric gears of the type disclosed in, e.g. EP-A-594 549 and US-A-5,030,184, have in common is that the inner gear ring is formed on a ring-shaped body with a small axial extension, from which the gear-reduced rotary motion is transferred to the output shaft over a coupling in the form of a ring-shaped, comparatively thin plate having some form of carrier elements which cooperate with the gear ring as well as the output shaft. The carrier elements may for instance consist of two pairs of shoulders on the gear ring and the output shaft, respectively, which engage into four equidistantly separated recesses in the coupling plate. An advantage with this type of eccentric gear is that the axial installation dimension is reduced to a minimum. However, a disadvantage is that the construction comprises several machine components, which each one requires a meticulous machining; something that renders the gear in its entirety expensive. Another disadvantage is that the coupling plate requires a considerable axial extension in order to attain an acceptable stiffness. For a given outer diameter of the gear housing, the possibilities are in this way limited to shape the plate, and thereby the input shaft, with a central hole of a considerable diameter. This restricts the possibilities of drawing machine components and/or conduits of different sorts through the input shaft. In practice, the diameter of the through hole through the input shaft is limited to 20 to 30 mm. It should also be pointed out that in practice, roll bodies are required between the carrier shoulders and the side surfaces of the recesses formed in the coupling plate in order to obtain rolling friction rather than sliding friction between the radially movable shoulders and said side surfaces. Thus, by the fact that previously known gears include a large number of components, there is, at all production, a general risk of undesired non-rigidity or play in the construction.

### Objects and Characteristics of the Invention

The present invention aims at removing the above mentioned disadvantages of previously known eccentric gears of the type that is produced and offered as independent product units. Thus, a primary object of the present invention is to provide an eccentric gear which, at strong gear reduction of the rotation speed between the input and output shafts comprised by the gear, is capable of transferring a torque between the rotation speed reducing element and the output shaft by a minimum of components. Another object is to provide a gear with a large torsional stiffness when transferring a torque between the rotation speed reducing element and the output shaft, i.e., with minimal tendencies of play or non-rigidity between said element and the output shaft. Another important object of the invention is to bring about an eccentric gear that may be made with a large through hole in order to facilitate the passage of, e.g., shafts, conduits or similar centrally through the gear. Still another object is to provide a gear that by constructional simplicity is cheap to produce not only with regard to the material costs, but also with regard to the machining costs.

According to the invention, at least the primary object is attained by the features that are defined in the characterizing clause of claim 1. Further, preferred embodiments of the invention are defined in the dependent claims.

### Further Elucidation of the Prior Art

In EP-A-607283 a device is disclosed comprising a sleeve that has an external gear ring intended to roll off upon an internal gear ring with a larger pitch diameter, the sleeve during this rolling-off performing a nutating motion. However, in this case the gear sleeve is included in a fast-rotatable distributing roller and has the purpose of setting the roller in an axial, reciprocal motion. Therefore, at its distal end from the gear ring, the sleeve is connected to a cam groove element that transforms the rotary motion of the sleeve which rotates with a moderately deviating rotation speed, into an axial reciprocating motion of the externally located roller. Thus, in this case no coupling exists that transfers a torque in a radial plane between the sleeve and an output shaft. What is more, the gear ring provided with internal teeth is not included in any gear housing, but rather in a fast-rotating roller.

In SE-C-501463 (filed on 8 September 1993, but not pre-published) an eccentric gear is shown of the type initially referred to. However, in this case the coupling between the nutating sleeve and the second or output shaft part consists of a tooth rim coupling using curved teeth and not a coupling making use of peripherically separated rolling bodies.

### Brief Description of the Appended Drawings

In the drawings:
- Fig 1: is a side view partly shown in a longitudinal section of an eccentric gear made according to the invention,
- Fig 2: is an enlarged longitudinal section showing an output shaft part included in the gear according to fig 1,
- Fig 3: is a longitudinal section of a sleeve provided with a gear ring, said sleeve being included in the gear,
- Fig 4: is a highly enlarged longitudinal section through only the upper half of a somewhat modified gear according to fig 1,
- Fig 5: is an end view V-V in fig 1, shown in a modified scale,
- Fig 6: is a cross-section VI-VI in fig 1, shown in enlarged scale,
- Fig 7: is an enlarged detail outcut in the region "twelve o'clock" in fig 6,
- Fig 8: is an explanatory sketch which illustrates some geometrical characteristics of the gear according to the invention in a distorted state and with strongly exaggerated angles,
- Fig 9: is a longitudinal section corresponding to fig 4 and showing a modified embodiment of the gear according to fig 1 to 7, and
- Fig 10: is a similar longitudinal section showing an alternative embodiment of the gear according to the invention.

### Detailed Description of Preferred Embodiments of the Invention

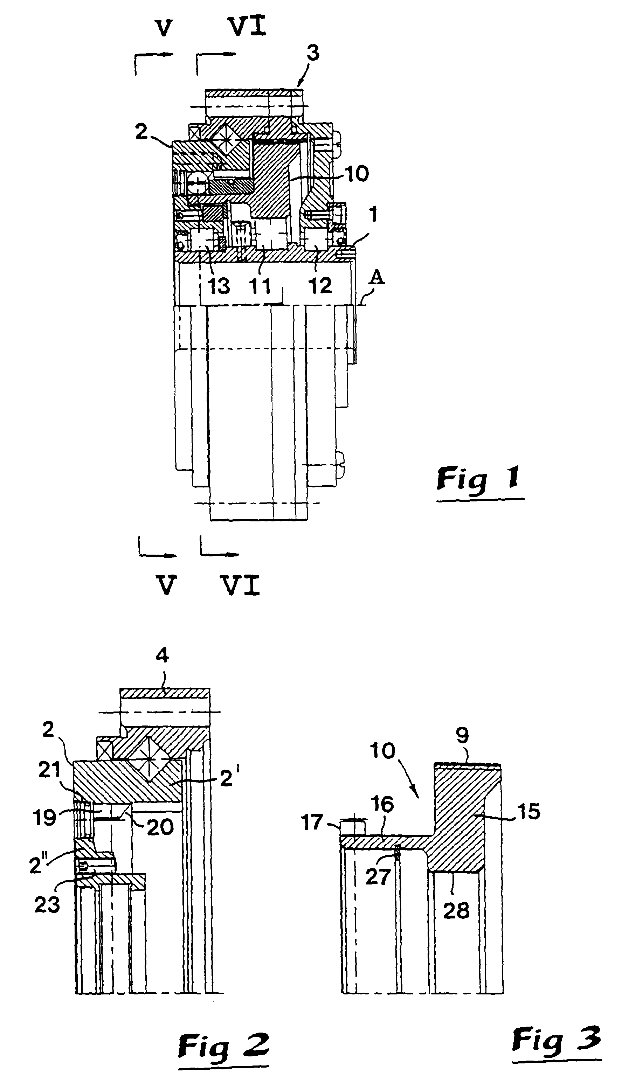

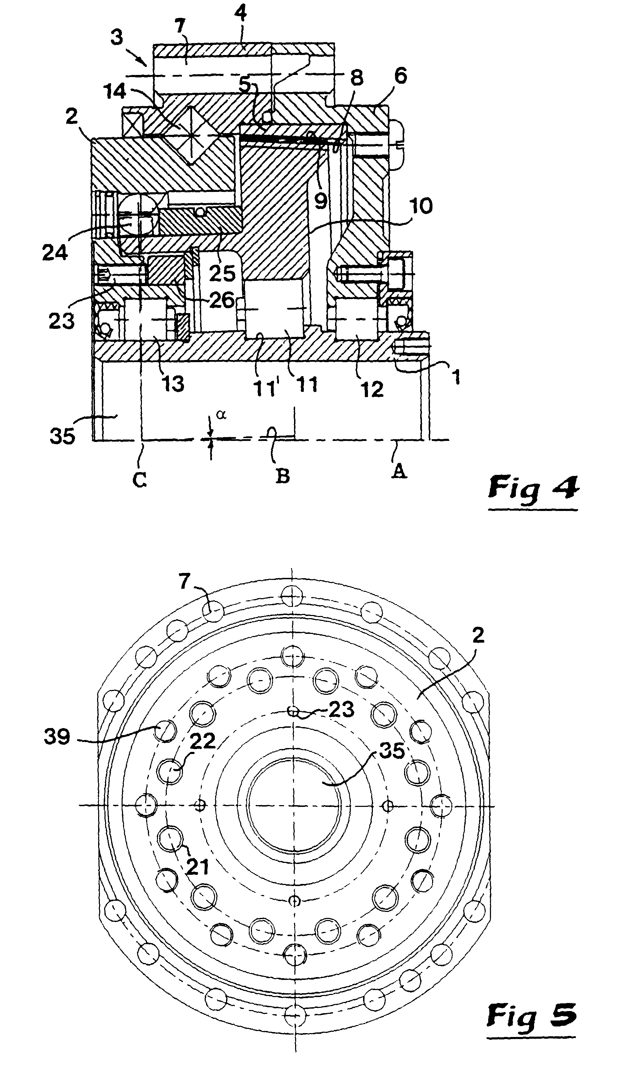

In fig 1 to 7 an eccentric gear is shown, in which are included first and second shaft parts 1, 2, which are rotatable around a common, central geometrical axis A. The first shaft part 1 is usually an input or driving shaft, while the second shaft part 2 is an output or driven shaft. The shaft parts 1, 2 are mounted in bearings relative to a common housing that is designated by reference numeral 3 in its entirety, which housing according to the example is composed of three frame units, viz. a ring-shaped bearing part 4 (see fig 4), an equally ring-shaped intermediate part 5 and a gable part 6 (the shape of intermediate ring 5 in fig 4 differs from the intermediate ring in fig 1). These parts 4, 5, 6 are inter-connected via a screw or bolt joint comprising a large number of screws or bolts which are insertable into holes 7. In the intermediate ring 5 are included a first, outer gear ring 8 consisting of a plurality of inwardly directed or internal teeth. This gear ring is arranged to cooperate with a second, external gear ring 9 on a sleeve or sleeve-like body which in its entirety is designated by reference numeral 10 and which is eccentrically mounted in bearings relative to the central axis A. More specifically, the sleeve 10 is mounted by means of a roller bearing 11 outside a middle part of the input shaft 1. Most advantageously, the external gear ring 9 is conical, while the internal gear ring 8 may be either conical or cylindrical. Otherwise, the input shaft 1 is mounted in bearings relative to the housing 3 as well as to the second shaft part 2 via bearings in the form of roller bearings 12, 13 with cylindrical bearing races which are concentrical with the axis A. In addition, the output shaft 2 is mounted in bearings relative to the housing part 4 via a cross roller bearing 14. It should also be noted that the input shaft 1 is tubular and has a through cavity designated 35. Also the output shaft 2 is tubular, in that it encircles the input shaft 1 and has a larger diameter than the latter. Advantageously - but not necessarily - the teeth in the gear rings 8, 9 consist of involute or cycloidal teeth.

The general construction of the eccentric gear according to fig 1, such as hitherto described, is previously known per se. However, in previously known eccentric gears a ring body with an external gear ring has been used as a rotation speed reducing element, and a special, ring-shaped coupling plate has been used as a torque-transferring coupling between the tooth-carrying ring body and the output shaft 2, said plate having two pairs of diametrically opposed recesses into which pairs of carrying shoulders on the output shaft and the ring body, respectively, engage. Contrary to this, the gear according to the present invention lacks any form of separate coupling plate, and by the fact that the gear ring 9 has been provided upon a nutating sleeve 10, the required coupling for torque transfer between the element carrying the gear ring, i.e. the sleeve 10, and the output shaft 2, may be made in a way which is not only simple but also guarantees a large torsional stiffness, as will be clear by the detailed description underneath.

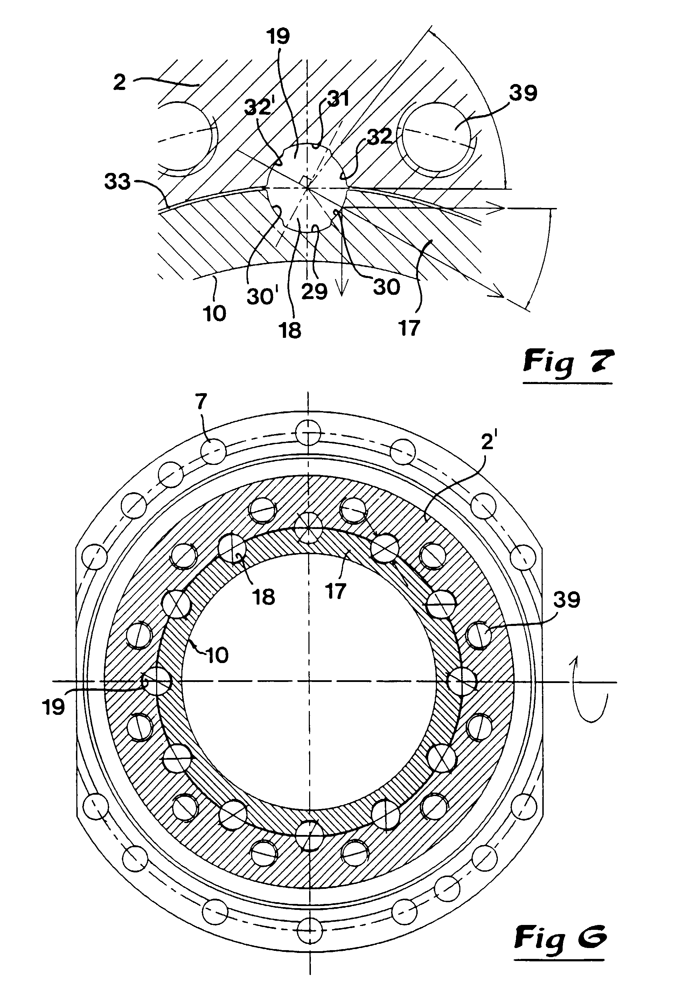

As may be seen in fig 3, the sleeve body 10 of the exemplified embodiment is formed with a relatively strong ring-shaped part 15, which carries the gear ring 9, and a tubular part 16 protruding from said part 15, said part 16 advantageously having a moderate wall thickness. A ring-shaped bead 17 is provided at the free end of the tubular part 16, which bead makes part of a coupling between the sleeve 10 and the output shaft 2, and in which a plurality of seats 18 are recessed, as shown in fig 6 to 8. Analogous seats 19 are recessed in a similar, ring-shaped bead 20 provided on the inside of a substantially cylindrically shaped part 2' of the output shaft 2. As may be seen in fig 2, the bead 20 and the appurtenant seats 19 are provided in the immediate adjacency to a gable-forming part 2" of the output shaft 2. In the gable part 2" are recessed a number of holes 21 corresponding to the number of seats 19, which holes are closable by plugs 22 (see fig 5). Further, in the gable part 2" are arranged a suitable number, for instance four, of set screws 23, by which the axial position of the gear sleeve 10 may be adjusted. In fig 5 is also shown that in the output shaft 2 are recessed a number of threaded holes 39 for the connection of a driven object to the gear.

In fig 4 it may be seen that the cylindrical bearing race 11' for the roller bearing 11 is otherwise weakly inclined in relation to the input shaft 1. More specifically, the cylinder surface 11' is concentrical relative to an imaginary geometrical axis B that is inclined by a certain, small angle a relative to the axis A. In practice, the angle α may be within the range 1 to 3°, and in the embodiment shown in fig 4 it amounts to about 1,4°.

Before the function of the gear is described in more detail, it should be mentioned that balls 24, i.e. bodies of a spherical shape, are arranged in the cavities which are commonly formed by the previously mentioned seats 18, 19. These balls are kept in place in the cavities between on one hand the plugs 22 and on the other hand a stop shoulder, in this case formed by two semi-circle-shaped ring segments 25. The set screws 23 act against an adjustment ring 26, which is in contact with a locking ring 27 (see fig 3) over an insert spacer, said locking ring being located in a groove on the inside of the tubular part 16 of the gear sleeve 10. As may be clearly seen in fig 3, the ring portion 15 of the sleeve 10 is internally delimited by a cylindrical surface 28 that permits a free axial displacement of the sleeve relative to the roller bodies in the roller bearing 11. Thus, it is evident that the axial position of the sleeve 10 relative to the roller bearing 11 may be adjusted by means of the set screws 23. In turn, this implies that the play between the teeth in the gear rings 8, 9 may be adjusted.

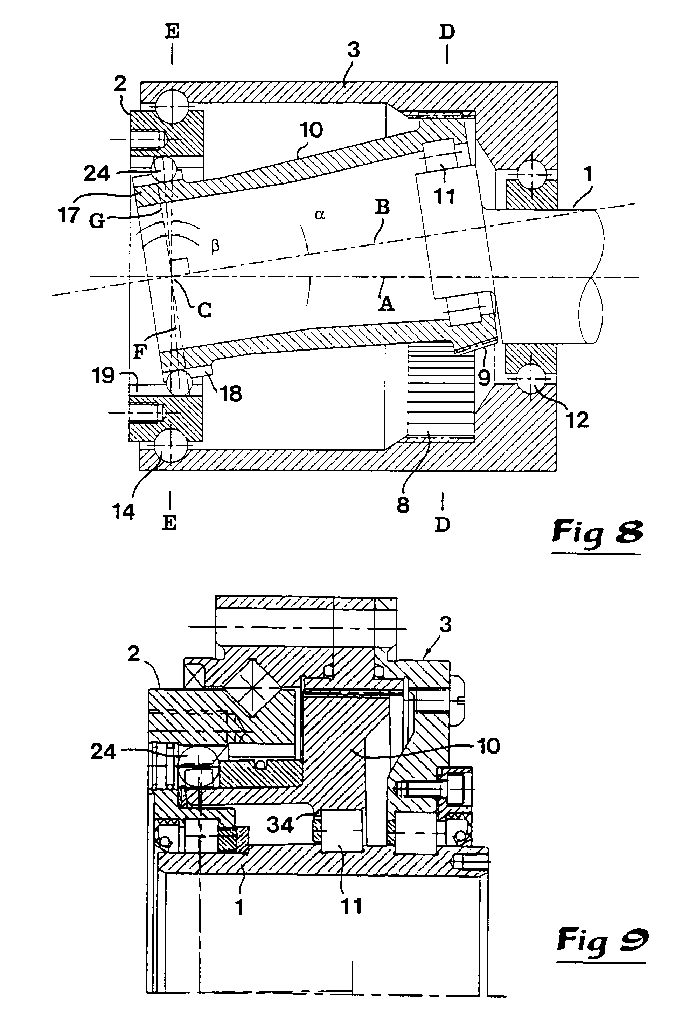

In the simplified and partly distorted explanatory sketch according to fig 8, the gear sleeve 10 is shown inclined by an angle α which is many times magnified for the sake of clarity. In this figure, D-D designates a cross-plane that extends perpendicularly to the axis A-A, in which plane the gear rings 8, 9 are located. A corresponding cross-plane at the opposite end of the gear sleeve 10 is designated E-E.

By the fact that the axis B of symmetry or rotation of the gear sleeve 10 is inclined relative to the axis A (see again fig 4), the sleeve will be submitted to a nutating motion when the inner gear ring 9 rolls upon the outer gear ring 8. More specifically, when the input shaft 1 is set in rotation in a given direction of rotation, by means of a suitable driving source, then the sleeve 10 will turn around or rotate in the opposite direction by at least one tooth in the gear ring 9 being in engagement with the outer gear ring 8. During the rotation of the input shaft, the sleeve is therefore submitted to a motion (a nutating motion), during which the axis of symmetry B moves as a generatrix along an imaginary cone surface, more specifically around a cone apex designated C that is located in the cross-plane E-E, which is axially distanced by a considerable distance from the cross-plane D-D in which the gear rings 8, 9 are located. Depending upon the difference in numbers of teeth in the two gear rings 8, 9, a vigorous gear reduction of the rotation speed from the input shaft 1 to the sleeve 10 is thereby effected. Suppose that the number of teeth in the ring 8 amounts to 90 and that the number of teeth in the ring 9 amounts to 89. Then the gear change between the input shaft and the sleeve becomes 89:1. However, independently of the magnitude of the gear change, it is required that a frequently large torque is transferred from the sleeve 10 to the output shaft 2. This is effected in the following way by means of the coupling that is active in a radial plane, which coupling is formed by the ring-shaped set of balls 24.

According to a preferred embodiment of the invention, the seats 18, 19, which together form a ball-accomodating cavity, have the form of cross-sectionally substantially semi-circle-shaped, suitably straight grooves. The first groove 18 extends parallel to the axis of symmetry B of the sleeve 10, while the second groove 19 extends parallel to the axis A. As may be seen in fig 7, a countersink 29 is provided in the bottom of the seat groove 18, which countersink separates two cylinder-shaped part surfaces 30, 30'. Correspondingly, the groove 19 has a countersink 31 that separates two cylinder part surfaces 32, 32'. Suppose that the gear sleeve 10 rotates in the direction counter-clockwise in fig 7. A ball 24 (not shown in fig 7) that is mounted in the cavity formed by the seat grooves 18, 19 will then transfer a force from the cylinder part surface 30 to the diametrically opposed cylinder part surface 32' and carry the shaft part 2 in the same direction of rotation. The transfer of force is effected by linear contact between the ball and the cylinder part surfaces, more specifically mainly along the whole circular arc-line that extends from the appurtenant countersink 29 and 31, respectively, to the limit zone designated 33 between the sleeve 10 (in particular its ring bead 17) and the shaft part 2 (i.e., its corresponding ring bead 20). By the fact that the balls which form the coupling are located in the region of the cross-plane E-E cutting the cone apex C (see fig 4 and 8), the tilting motions to which the end of the sleeve being distal from the gear ring 9, is submitted due to the nutating motion pattern of the sleeve, will be reduced to a minimum. The angle of eccentricity α is limited to the range 1 to 3°, involving that the free end of the sleeve 10 in connection with the coupling, will move on one hand with moderate motions in the axial direction, and on the other hand with small motion deflections in the radial direction. For the embodiment as shown in fig 1 and 4, it has been calculated that the maximal, axial motion length for an arbitrary point in the end part of the sleeve is less than 1,4 mm, implying that the axial movements of the balls 24 maximally attain 0,7 mm. The radial motion deflection of points on the end part of the sleeve, which part is in contact with the balls 24, then amounts to a few µm.

According to the example, the number of balls is 24, the balls being approximately equidistantly distributed and located mainly in a common plane that extends obliquely towards the axis A. More precisely, the plane designated F for the set of balls 24 is inclined by an angle β which is a bisector angle between the plane E-E and the plane G being perpendicular to the axis B, and which is equal to a/2. During the transfer of torque from the sleeve 10 to the output shaft 2, all twelve balls receive about the same load, by functioning between the cylinder part surfaces in the way as shown in fig 7. However, during rotation the individual ball is free to roll axially in the appurtenant seat groove 18, 19 in order to permit the free end of the sleeve to tilt relative to the shaft part 2. In other words, the described ball coupling permits the sleeve to perform the necessary nutating motions at the same time as it guarantees an efficient transfer of force to the shaft part.

In practice, it is important that the load upon the coupling balls 24 becomes even, i.e., that all twelve balls receive about an equally large load. Of this reason, the cylinder part surfaces 30, 30', 32, 32' which together form a cavity for a given ball, should be jointly machined, for instance by honing or jig grinding. Thus, before assembling the gear, the gear sleeve 10 and the output shaft 2 should be applied into a suitable fixture, and then said cylinder part surfaces are honed or ground to the desired dimension and marked so that simultaneously machined part surfaces are brought to cooperate also after final assembling of the gear. The diameter of the balls is chosen so that a suitable preload (play elimination) is obtained when the balls are applied into the appurtenant cavities. In practice, a certain contact resilience will be obtained in the linear abutments between the balls and the cylinder part surfaces. This contact resilience is fully sufficient for absorbing the extremely small motion deflections in the radial direction, to which the end of the sleeve 10 is submitted. By the fact that the part 16 of the gear sleeve is relatively thin-walled, a certain, although limited radial resilience possibility for the balls is also obtained.

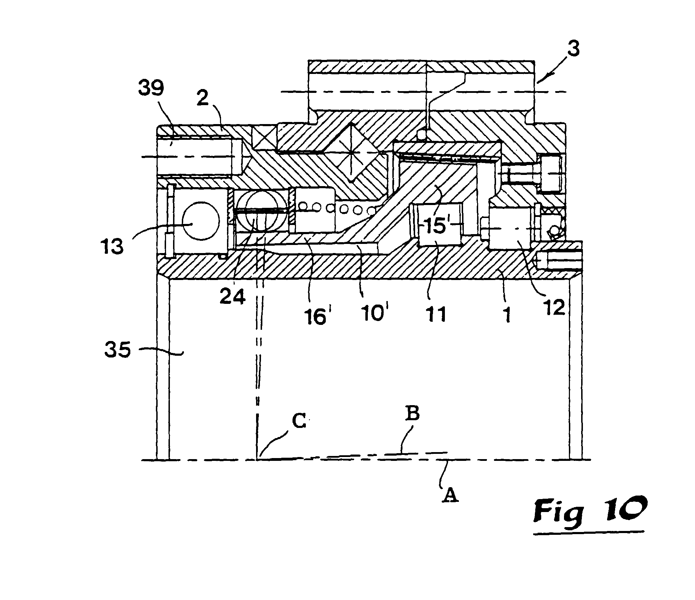

In fig 9 a modified embodiment is shown, according to which the gear sleeve 10 is formed with a diminutive stop flange 34 in connection with the bearing race for the roller bearing 11. This stop flange 34 makes an axial displacement of the gear sleeve in a direction to the right from the position shown in fig 9 impossible.

In fig 10 an alternative embodiment of the invention is shown, according to which the gear sleeve 10 has a reduced radial extension and an increased axial extension in comparison with the previously described gear sleeve. Therefore, in this case the through central hole 35 through the tubular input shaft 1 may be made with a considerably larger diameter than the correspondig hole 35 in the embodiments according to fig 1 to 9. However, it should here be emphasized that already in the embodiments according to fig 1 to 9 the diameter of the shaft hole is considerably larger than in previously known eccentric gears which work with couplings in the form of separate plates between the output shaft and the rotation speed reducing element.

In the embodiment according to fig 1 to 7, the ring-shaped part 15 of the gear sleeve 10 has a radial extension which is 8 to 10 times larger than the wall thickness of the tubular part 16. At the same time, the outer diameter (at the gear ring 9) of the gear sleeve is almost twice as large as the inner diameter (at the bearing run race 28) of the sleeve. In the embodiment according to fig 10, the ring part 15' has a considerably smaller radial extension. More specifically, the radial extension is only about twice as large as the wall thickness of the tubular part 16'. At the same time, the largest diameter of the gear sleeve 10' is only about 40% larger than the smallest inner diameter (on the inside of the tubular part 16'). In both cases, the tubular parts are relatively thin-walled. In spite of this, the sleeve has a large rotary stiffness specifically due to the tubular shape, whereby large torques may be transferred to the output shaft.

### Feasible Modifications of the Invention

The invention is not restricted solely to the embodiments as described and shown in the drawings. Thus, instead of balls it is for instance feasible to use roller bodies in the form of at least weakly curved cylinder bodies. Furthermore, it is feasible to introduce two balls instead of only one into each cavity formed by two grooves. It should also be mentioned that the transfer of torque may also be effected between an outer gear sleeve and an output shaft part arranged within the sleeve. In the exemplified embodiments, the roller bearing 11 for the gear sleeve 10 is shown as arranged in a countersunk bearing race in the input shaft 1. It is also feasible to keep the bearing by two shoulders on the inside of the gear sleeve, at the same time as the bearing is substantially axially movable reciprocally along a bearing race without any limits. It is also possible to produce the output shaft 2 of two separate, mutually demountably connected parts of which one is joined to the cross roller bearing 14 and the other to the roller bearing 13. Besides, it should be emphasized that the gear may work in the direction opposed to the one as described above, i.e., in such a way that the second shaft part 2 becomes the driving one and the first shaft part 1 the driven one. It is also feasible to produce the gear according to the invention as a differential embodiment according to which the housing 3 is turnable or rotatable and has an external gear ring connected to a separate driving source.

The invention has been described above in connection with preferred embodiments which all make use of an engagement of teeth between the nutating sleeve and the surrounding gear housing in order to guarantee the desired, planetary rolling-off of the sleeve upon the inside of the gear housing. However, within the scope of the invention it is also.feasible to secure this rolling-off by a frictional engagement between the sleeve and the gear housing. Thus, the two gear rings 8, 9 may be replaced by rings or run races in the form of substantially smooth surfaces which are in frictional engagement with each other in a point which travels along the internal, fixed ring. In this case, either or both rings or race surfaces should have a conical basic shape, the sleeve always being held axially pressed by a conical ring against the inside of the fixed ring of the gear housing. The pressing of the sleeve may be realized by means of a suitable spring, although other means are also feasible. Instead of entirely smooth surfaces which are in frictional engagement with each other, it is also feasible to use knurled surfaces, or surfaces which have been roughened in any other way, for instance weakly waved or serrated surfaces, which improve the engagement between the rings without because of this creating a real engagement of teeth of the type as described above. In practice, gears which work with frictional engagement instead of engagement of teeth, are suitable for the transfer of moderate or low torques, contrary to the high torques which occur, e.g., in industrial process controllers. However, the advantages of a gear provided with a frictional contact between the sleeve and the gear housing are on one hand that the costs of production are reduced most significantly, and on the other hand that the gearing ability of the gear may be radically increased. Thus, it is feasible to make such gears with gearing relations in the range of 1000:1 or even larger.

## Claims

1. An eccentric gear unit comprising an input shaft (1) and an output shaft (2) which are rotatable around a common geometrical axis (A) and mounted in bearings relative to a common stationary housing (3) in which is comprised an internal rim (8); a rotation speed reducing element (10) being rotatably mounted in bearings relative to the input shaft (1) and having an external rim (9) which has a smaller diameter than the internal rim (8) and is eccentric in relation to it, the external rim (9) being in engagement with the internal rim (8) in order to roll off upon it and rotate around its own geometrical axis (B) of symmetry in a direction that is opposite to the direction of rotation of the input shaft (1), and the thus obtained gear ratio change between the input shaft (1) and the rotation speed reducing element (10) being dependent upon the difference of diameters between the two rims; and the rotation speed reducing element consisting of a sleeve or sleeve-like body (10), whose geometrical axis (B) of symmetry is oblique relative to the common axis (A) of symmetry of the shafts (1, 2) and which during the rolling-off of the external rim (9) upon the internal rim (8) is submitted to a nutating motion, during which the axis (B) of symmetry of the sleeve or sleeve-like body (10) moves as a generatrix along the envelope surface of an imaginary cone, more specifically around a cone apex (C) that is axially distanced from the transverse plane (D-D) in which the rims (8, 9) are situated, and a coupling (24) located in the region of a transverse plane that intersects the cone apex (C) is arranged to transfer a torque in a radial plane between the sleeve or sleeve-like body (10) and the output shaft (2), **characterized** in that the coupling comprises a plurality of peripherically separated roller bodies (24) of which each one partly engages into on one hand a first seat (18) connected with the sleeve (10), and on the other hand into a second seat (19) connected with the output shaft (2), in that the first and second seats have the shape of cross-sectionally substantially semi-circle-shaped, straight grooves (18, 19) of which the first one (18) extends parallel to the axis (B) of symmetry of the sleeve (10) and the second one (19) extends parallel to the axis (A) of symmetry of the second shaft part (2), and in that at the bottom of each seat groove (18, 19) a countersink (29, 31) is arranged that separates two cylinder-shaped part surfaces (30, 30'; 32, 32').

2. Eccentric gear unit according to claim 1, **characterized** in that the internal rim (8) consists of a gear ring having internal teeth and the external rim (9) of a gear ring having external teeth, the engagement between the sleeve or sleeve-like body and the surrounding housing that guarantees the rolling-off upon the inside of the latter having the form of a tooth engagement.

3. Eccentric gear unit according to claim 1, **characterized** in that the engagement between the two rims consists of a frictional engagement.

4. Eccentric gear according to any one of the preceding claims, **characterized** in that the roller bodies consist of balls (24).

5. Eccentric gear unit according to claim 4, **characterized** in that the torque transfer between the sleeve or sleeve-like body (10) and the output shaft (2) over the individual ball (24) being effected between a first cylinder part surface (30) in the groove (18) of the sleeve or sleeve-like body (10) and a diametrically opposed second cylinder part surface (32') in a corresponding groove (19) in the output shaft (2) when the sleeve or sleeve-like body and the output shaft rotate in the one direction of rotation, and vice versa when the rotation takes place in the other direction.

6. Eccentric gear according to claim 5, **characterized** in that the two seat grooves (18, 19) for an individual ball (24) are jointly machined, for instance by honing or jig grinding.

7. Eccentric gear according to any of claims 4 to 6,
**characterized** in that the individual ball is kept in place by on one hand a plug (22) in a hole (21) that is recessed in a gable (2") of the output shaft (2), through which hole at least one ball is insertable, and on the other hand a ring-shaped stop element (25).

8. Eccentric gear according to any of the preceding claim, **characterized** in that the sleeve or sleeve-like body (10) is movable along its axis (B) of symmetry and possible to influence by means, e.g. set screws (23), by means of which the play between the rims (8, 9) may be changed.

## Patentansprüche

1. Exzentergetriebeeinheit, aufweisend eine Eingangswelle (1) und eine Ausgangswelle (2), die um eine gemeinsame geometrische Achse (A) drehbar und in Lagern relativ zu einem gemeinsamen stationären Gehäuse (3) angebracht sind, in welchem ein Innenkranz (8) angeordnet ist; ein Drehzahlverringerungselement (10), das in Lagern relativ zu der Eingangswelle (1) drehbar angebracht ist, und einen äußeren Kranz (9) aufweist, der einen größeren Durchmesser als der innere Kranz (8) hat und exzentrisch relativ zu diesem ist, wobei der äußere Kranz (9) sich im Eingriff mit dem inneren Kranz (8) befindet, um auf ihm abzurollen und sich um seine eigene geometrische Symmetrieachse (B) in einer Richtung zu bewegen, die entgegengesetzt zu der Drehrichtung der Eingangswelle (1) verläuft, wobei die derart erzielte Untersetzungsverhältnisänderung zwischen der Eingangswelle (1) und dem Drehzahlverringerungselement (10) von der Differenz der Durchmesser zwischen den zwei Kränzen abhängt; und das Drehzahlverringerungselement aus einer Buchse oder einem buchsenartigen Körper (10) besteht, dessen geometrische Symmetrieachse (B) schräg relativ zu der gemeinsamen Symmetrieachse (A) der Wellen (1, 2) verläuft und während des Abrollens des äußeren Kranzes (9) auf dem inneren Kranz (8) einer Nutationsbewegung unterworfen ist, während welcher die Symmetrieachse (B) der Buchse bzw. des buchsenartigen Körpers (10) sich als Erzeugende entlang der Hüllenfläche eines imaginären Kegels bewegt, insbesondere, um eine Kegelspitze (C), die von der Querebene (D-D) axial beabstandet ist, in welcher die Kränze (8, 9) angeordnet sind, und wobei eine Kupplung (24) die im Bereich einer Querebene angeordnet ist, welche die konische Spitze schneidet, dazu ausgelegt ist, ein Drehmoment in einer Radialebene zwischen der Buchse bzw. dem buchsenartigen Körper (10) und der Ausgangswelle (2) zu übertragen, dadurch gekennzeichnet, daß die Kupplung mehrere umfangsmäßig getrennte Wälzkörper (24) aufweist, von welchen jeder teilweise eingreift einerseits in einen ersten Sitz (18), der mit der Buchse (10) verbunden ist, und andererseits in einen zweiten Sitz (19), der mit der Ausgangswelle (2) verbunden ist, daß die ersten und zweiten Sitze die Form von im Querschnitt im wesentlichen halbkreisförmigen geraden Nuten (18, 19) aufweisen, von welchen eine erste (18) sich parallel zu der Symmetrieachse (B) der Buchse (10) und die zweite (19) sich parallel zu der Symmetrieachse (A) des zweiten Wellenteils (2) erstreckt, und daß am Boden jeder Sitznut (18, 19) eine Senkung (29, 31) angeordnet ist, welche zwei zylinderförmige Teiloberflächen (30, 30'; 32, 32') trennt.

2. Exzentergetriebeeinheit nach Anspruch 1, dadurch gekennzeichnet, daß der innere Kranz (8) aus einem Zahnkranz mit Innenverzahnung und der äußere Kranz (9) aus einem Zahnkranz mit Außenverzahnung besteht, wobei der Eingriff zwischen der Buchse bzw. dem buchsenartigen Körper und dem umgebenden Gehäuse, der das Abrollen auf der Innenseite des letztgenannten gewährleistet, die Form eines Zahneingriffs hat.

3. Exzentergetriebeeinheit nach Anspruch 1, dadurch gekennzeichnet, daß der Eingriff zwischen den zwei Kränzen aus einem Reibungseingriff besteht.

4. Exzentergetriebeeinheit nach einem der vorangehenden Ansprüche, dadurch gekennzeichnet, daß die Wälzkörper aus Kugeln (24) bestehen.

5. Exzentergetriebeeinheit nach Anspruch 4, dadurch gekennzeichnet, daß die Drehmomentübertragung zwischen der Buchse bzw. dem buchsenartigen Körper (10) und der Ausgangswelle (2) über die einzelne Kugel (24) zwischen einer ersten Zylinderteiloberfläche (30) in der Nut (18) der Buchse bzw. des buchsenartigen Körpers (10) und einer diametral gegenüberliegenden zweiten Zylinderteiloberfläche (32') in einer entsprechenden Nut (19) in der Ausgangswelle (2) erfolgt, wenn die Buchse bzw. der buchsenartige Körper und die Ausgangswelle sich in einer Drehrichtung bewegen, und umgekehrt, wenn die Drehung in der anderen Richtung stattfindet.

6. Exzentergetriebeeinheit nach Anspruch 5, dadurch gekennzeichnet, daß die zwei Sitznuten (18, 19) für eine einzelne Kugel (24) gemeinsam spanabhebend geformt sind, beispielsweise durch Honen oder Koordinatenschleifen.

7. Exzentergetriebeeinheit nach einem der Ansprüche 4 bis 6, dadurch gekennzeichnet, daß die einzelne Kugel durch einerseits einen Stopfen (22) in einem Loch (21), welches in eine Gabel (2") der Ausgangswelle (2) eingetieft ist, durch welches Loch zumindest eine Kugel einführbar ist, und andererseits ein ringförmiges Anschlagelement (25) an Ort und Stelle gehalten ist.

8. Exzentergetriebeeinheit nach einem der vorangehenden Ansprüche, dadurch gekennzeichnet, daß die Buchse bzw. der buchsenartige Körper (10) entlang ihrer bzw. seiner Symmetrieachse (B) beweglich und in der Lage ist, Mittel, beispielsweise Stellschrauben (23) zu beeinflussen bzw. durch diese Mittel beeinflußt zu werden, wodurch das Spiel zwischen den Kränzen (8, 9) geändert werden kann.

## Revendications

1. Unité de distribution excentrique, comprenant un arbre d'entrée (1) et un arbre de sortie (2) qui sont tournables autour d'un axe géométrique commun (A) et montés en paliers relatifs a un carter stationnaire commun (3) dans lequel est comprise une jante interne (8); un élément réducteur de vélocité de rotation (10) étant tournablement monté en paliers relatifs à l'arbre d'entrée (1) et ayant une jante externe (9) qui a un diamètre plus petit que ce de la jante interne (8) et qui est excentrique en relation a celle-ci, la jante externe (9) étant en embrayage avec la jante interne (8) pour rouler sur elle et tourner autour de son propre axe géométrique (B) de symétrie dans une direction qui est opposée à la direction de rotation de l'arbre d'entrée (1), et le coefficient de changement de distribution ainsi obtenu entre l'arbre d'entrée (1) et l'élément réducteur de vélocité de rotation (10) , étant dépendant sur la différence de diamètres entre les deux jantes; et l'élément réducteur de vélocité de rotation en consistant d'une manche ou corps en forme de manche (10), dont l'axe géométrique (B) de symétrie est oblique en relation a l'axe commun (A) de symétrie des arbres (1, 2) et qui, pendant le roulement de la jante externe (9) sur la jante interne (8) est soumis a un mouvement de nutation, pendant lequel l'axe (B) de symétrie de la manche ou corps en forme de manche (10) se mouve comme une génératrice le long de la surface enveloppe d'un cône imaginaire, plus spécifiquement autour d'un sommet de cône (C) qui est axialement distancé du plan transverse (D-D) dans lequel les jantes (8, 9) sont situées, et un crampon (24) placé dans la région d'un plan transverse qui intersectionne le sommet du cône (C) est rangé pour transférer un torque dans un plan radial entre la manche ou corps en forme de manche (10) et l'arbre de sortie (2), caractérisée en ce que le crampon comprend une pluralité de corps cylindriques séparés périphériquement (24) dont chaqu'un-cramponne partiellement d'un côté, dans un premier siège (18) connecté avec la manche (10), et d'autre côté dans un second siège (19) connecté avec l'arbre de sortie (2), en ce que le premier et le second sièges ont la forme de rainures droites, sectionellement croisées, substantiellement en forme de demi-cercle, (18, 19) dont le premier (18) s'étend parallel à l'axe (B) de symétrie de la manche (10) et le second (19) s'étend parallel à l'axe (A) de symétrie de la seconde partie de l'arbre (2) et en ce que au fond de chaque rainure du siège (18, 19) est rangé un encastrement (29, 31) qui sépare deux surfaces partielles en forme cylindrique (30, 30'; 32, 32').

2. Unité de distribution excentrique, selon revendication 1, caractérisée en ce que la jante interne (8) consiste d'un croc de distribution avec des dents intérieures et la jante externe (9) d'un croc de distribution avec des dents externes, le cramponnement entre la manche ou corps en forme de manche et le carter entourant qui garantie le roulement sur l'intérieur de ce dernier ayant la forme d'un embrayage denté.

3. Unité de distribution excentrique, selon la revendication 1, caractérisée en ce que l'embrayage entre les deux jantes consiste d'un embrayage de friction.

4. Distribution excentrique selon quelqu'une des revendications précédentes, caractérisée en ce que les corps roulants consistent des balles (24).

5. Unité de distribution excentrique, selon la revendication 4, caraterisée en ce que le transfert de torque entre la manche ou corps en forme de manche (10) et l'arbre de sortie (2) sur la balle individuelle (24) étant effectué entre une première surface de pièce cylindrique (30) dans la rainure (18) de la manche ou corps en forme de manche (10) et une seconde surface de pièce cylindrique diametriquement opposée (32') dans une rainure correspondente (19) dans l'arbre de sortie (2) quand la manche ou corps en forme de manche et l'arbre de sortie tournent dans une direction de rotation, et vice-versa quand la rotation a lieu dans l'autre direction.

6. Distribution excentrique selon la revendication 5, caractérisée en ce que les deux rainures de siège (8, 19) pour une balle individuelle (24) sont actionnées conjointement, par example par émerillon de brunissage ou de gabarit.

7. Distribution excentrique selon quelqu'une des revendications 4 a 6, caractérisée en ce que la balle individuelle est maintenue en place par, d'un côté, une prise (22) dans un orifice (21) qui est rebaisée dans un pignon (2") de l'arbre de sortie (2) à travers lequel orifice au moins une balle est insérable, et, de l'autre côté, un élément d'arrêt en forme de croc (25) .

8. Distribution excentrique selon quelqu'une des revendications précédentes, caractérisée en ce que la manche ou le corps en forme de manche (10) est mouvable le long de son axe (B) de symétrie et possible d'influencer par des moyens, par example, des vis d'enrayage (23), par moyen de lesquels le jeu entre les jantes (8, 9) peut être changé.
